# EUROPEAN PATENT APPLICATION

(11) **EP 1 882 974 A1**
(43) Date of publication of application: **30.01.2008**
(21) Application number: 06015467.1
(22) Date of filing: 25.07.2006
(51) Int. Cl.: G02F 1/13357

(54) **Brightness enhancement structure of side-type LCD backlight module**

(71) Applicant: Mii, Jenn-Wei, Da-an District, Taipei City 106 (TW)
(72) Inventor: Mii, Jenn-Wei, Da-an District, Taipei City 106 (TW)
(74) Representative: Negendanck, Matthias

(57) **Abstract**

The present invention relates to a brightness-enhanced light-emitting structure (2,120) of a side-type backlight module applicable to a liquid crystal display, which comprises: a light screen (3,130), being a partial-open tube-like structure, having a primary visible light layer (6,160) coated on the inner circumference thereof; at least a light cover (4,140), each substantially being an extending of a side of the light screen (3,130) while being bended inwardly with respect to the primary visible light layer (6,160); and at least a light-emitting source (5c,5d,150), each being a bar-shaped tube or light emitting diode, capable of emitting blue/ultraviolet light while being enclosed in the concave of the corresponding light cover (4,140). By which, not only most of the visible light can be reflected and emitted out of the brightness-enhanced light-emitting structure (2,120) without being blocked by the light-emitting source (5c,5d,150), but also the visible light, generated from the excitation of a fluorescence/phosphorescence material of the visible light layer (6,160), can be reflected and emitted out of the brightness-enhanced light-emitting structure (2,120) without being filtered by the visible light layer (6,160).

## Description

### FIELD OF THE INVENTION

The present invention relates to a brightness-enhanced light-emitting structure of a side-type backlight module applicable to a liquid crystal display, and more particularly, to a backlight module capable of emitting visible light rays, primarily excited from the surface of the fluorescent/phosphorescent coating of a visible light layer, in a reflective manner, so that not only the light utilization efficiency and the intensity of light as it is entering light guide plates is greatly improved, but also it can be adapted for any luminescent assembly, device and apparatus.

### BACKGROUND OF THE INVENTION

Generally, the brightness of any conventional light emitting device, such as a fluorescent lamp, is dependent upon the light utilization efficiency of the light source used thereby, no matter it is being used as the light emitting device of a light fixture, a display board, a alarm device, or any electronic apparatus. As fluorescent lamps are more efficient than incandescent light bulbs of an equivalent brightness since more of the consumed energy is converted to usable light and less is converted to heat, allowing fluorescent lamps to run cooler, most luminescent apparatuses available now adopt fluorescent lamps as their light sources. A fluorescent lamp is substantially a glass tube filled with an inert gas and mercury vapor while the inner surface of the tube is coated with a fluorescent paint made of varying blends of phosphors. When the light is turned on, the electric power heats up the cathode of the fluorescent lamp enough for it to emit electrons. These electrons collide with and ionize inert gas atoms in the tube to form a plasma by a process of impact ionization. As a result of avalanche ionization, the conductivity of the ionized gas rapidly rises, allowing higher currents to flow through the lamp, and thus the mercury is then likewise ionized, causing it to emit light in the ultraviolet (UV) region. The UV light is absorbed by the fluorescent coating, which re-radiates the energy at lower frequencies to emit visible light. The blend of phosphors controls the color of the light, and along with the tube's glass prevents the harmful UV light from escaping. However, the aforesaid fluroscent lamp is disadvantageous in that:
(1) As the fluorescent coating is a phosphor film with a specific thickness while the surface of the phosphor film can be easily excited by the ultraviolet light to emit visible light, the intensity of the ultraviolet light is weakening as it is penetrating deeper into the phosphor film so that the visible light generated deep in the phosphor is conceivably fewer than that from the surface of the fluorescent coating. Consequently, the fluorescent coating can be considered to be a light emitting device capable of emitting most light from its surface and lesser light from its interior. That is, visible light created deep inside the fluorescent coating will be weaker than that created at the surface thereof.
(2) The fluorescent coating is not a good translucent material and will cause the luminous intensity of the visible light, generated from the surface thereof, to be weakened when it is passing through the fluorescent coating and exiting from the glass tube. That is, the luminous intensity of the visible light is adversely affected by the fluorescent coating.

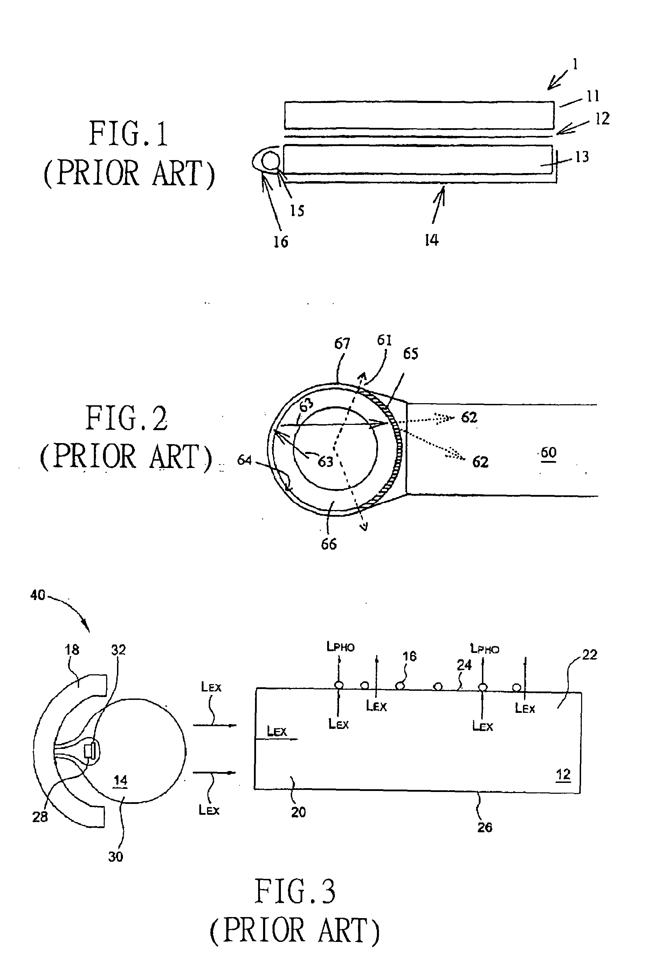

Please refer to FIG. 1, which shows a conventional LCD backlight module. The conventional backlight module 1 is comprised of a panel 11, a diffuser plate 12, a light guide plate 13, a reflective sheet 14, and a light source 15 arranged at a side or bottom of the light guide plate 13. In FIG. 1, the backlight module 1 is substantially a side-type backlight module since the light source 15 is arranged at a side of the light guide plate 13, and a semi-circular light screen 16 is arranged at a side of the light source 15 opposite to that of the light guide plate 13 for reflecting and re-directing the light emitting from the light source 15 toward the light guide plate 13. As soon as the light of the light source 15 is reflected by the light screen 16 and enters the light guide plate 13, it is being reflected and diffused by the reflective sheet 14 and the diffuser plate 12 for ensuring a uniform distribution of the light intensity onto the entire surface of the panel 11. Although the enhancing of the brightness of the light source 15 is quite capable of improving the uniform distribution and brightness of the panel 11, the brightness-enhanced light source 15 might generate more heat and thus heat-dissipating problem must be considered. Therefore, the design of the light screen 16 is becoming the key factor affecting the brightness of the backlight module 1. Since if the light screen 16 can not sufficiently reflect the light of the light source 15 and redirect the reflected light to enter the light guide plate 13, it can be concluded that not all of the light emitted from the light source 15 will enter the light guide plate 13 to be reflected and diffused by the reflective sheet 14 and the diffuser plate 12, and thus the brightness of the backlight module is adversely affected. However, most of the improvements over the backlight module are addressing either on the enhancing of the brightness of the light source, or on the redesigning of the structures of the diffuser plate, the light guide plate, and the reflective sheet, such as, adopting light emitting diode as the light source, designing a wedge-shaped light guide plate, or disposing microstructures on the diffuser plate, there is hardly any improvement on the light screen. As the structure shown in FIG. 1, a portion of the light reflected by the light screen 16 is blocked by the light source 15 itself and con not enter the light guide plate 13, such that the light utilization efficiency of the light source 15 is poor since not all the light emitted from the light source 15 can enter the light guide plate 13.

Please refer to FIG. 3, which shows an ultraviolet-emitting backlight module, disclosed in U.S. Pat. No. 5,739,879, entitled "Backlighting device for liquid crystal displays". The backlight module of FIG. 3 is comprised of: (a) a UV lamp 66 with a UV transmitting quartz envelop for emitting and transmitting UV light 63; (b) a light guide 60 disposed in front of the UV lamp 66 which allows visible light to travel therethrough, the light guide 60 having a front surface, a rear surface, and a proximal edge surface; (c) a lamp holder 67 with a UV-reflecting interior surface 64, which, in cooperation with the proximal edge surface of the light guide 60, encloses the UV lamp 66; and (d) a fluorescent layer 65 placed between the quartz envelop of the UV lamp 66 and the proximal edge surface of the light guide 60 capable of converting UV light 63 into visible light 62.

The advantage of the aforesaid backlight module is that: as the fluorescent layer 65 is only being placed between the quartz envelop of the UV lamp 66 and the proximal edge surface of the light guide 60, the ultra-violet (UV) light 63 is enabled to travel through the fluorescence layer 65 only when it enters the light guide 60, such that the visible light 62 does not have to travel through any fluorescence layer 65, and thus a superior energy utilization efficiency can be achieved by the fact that little or no visible light is absorbed by the fluorescent layer 65. However, the aforesaid backlight module is disadvantageous in that: although the visible light 62 will not be absorbed by the fluorescent layer 65, the structure of the lamp holder 67 is not improved for enhancing the mount of the UV light to be reflected thereby and directed toward the light guide 60, moreover, as most of the visible light 62 excited form the surface of the fluorescent layer 65 is filtered by the fluorescent layer 65 before being discharged therefrom and the intensity of the ultraviolet light 63 is weakening as it is penetrating deeper into the fluorescent layer 65, in addition to that the fluorescent layer 65 is not made of a good translucent material, the brightness of the fluorescent layer 65 is mainly dependent upon those visible light 62 generated from the interior of the fluorescent layer 65 so that the light utilization efficiency is poor.

Except for the aforesaid UV lamp, light emitting diode (LED) is commonly used for illumination as it is compact, solid, energy-saving, give off much less heat than incandescent light bulbs with similar light output, and has long life span wile offering high realibility. Please refer to FIG. 3, which shows a backlight module disclosed in TW Pat. No. 94120669. The backligh module 40 is comprised of: a light guide plate 12, having a fluorescent layer 16 coated on the light exiting surface 24 thereof; an LED device, being subatantially a case 30 packaging an LED chip 28 and a epoxy 32; and a light screen 18, disposed at a side of the LED device 14 opposite to that proximate to the light guide plate 12. By which, as the light *L_{EX}* emitted form the LED device 14 is directed to enter the substrate 22 of the light guide plate 12 form the light entrance 20, a portion of the light *L_{EX}* will be absorbed by the fluorescent layer 16 for causing the light *L_{PHO}* to be excited while mixing with the remaining *L_{EX},* not absorbed by the fluorescent layer 16. The mixture of the *L_{PHO}* and the remaining *L_{EX},* represented as the light *L_{WH},* is then being discharged out of the light exitting surface 24. The aforesaid backlight module can free from the problem troubling other conventional backlight modules that it is difficult to coat a layer of fluorescence material onto the surface of an LED uniformly and even which cause the resulting backlight module to have poor luminous efficiency. However, although in the faoresaid backlight module, the fluorescent layer can be either coated on the light exitting surface 24 or on the reflective surface 26, or can be doped in the substrate 22, it can only response to those *L_{EX}* that had already entered the light guide plate 16, and thus suffers the same prlblem of poor light utilization efficiency of the backlight module disclosed in U.S. Pat. No. 5,739,879.

To sum up, the primary reasons for those prior-art backlight module to have poor luminous efficiency are that the light emitted from the light source can not be completely directed to enter the light guide plate, and most of the visible light excited form the surface of the fluorescent layer is filtered by the fluorescent layer before it is being discharged therefrom, in addition to that the fluorescent layer is not made of a good translucent material, such that the light utilization efficiency is poor.

### SUMMARY OF THE INVENTION

In view of the disadvantages of prior art, the primary object of the present invention is to provide a brightness-enhanced light-emitting structure of a side-type backlight module applicable to a liquid crystal display, capable of emitting visible light rays, being primarily excited from the surface of the fluorescent/phosphorescent coating of a visible light layer, in a reflective manner, so that not only the light utilization efficiency, but also the intensity of light as it is entering a light guide plate, are greatly improved.

To achieve the above object, the present invention provides a brightness-enhanced light-emitting structure of a side-type backlight module applicable to a liquid crystal display, comprising:
a light screen, being a partial-open tube-like structure, having a primary visible light layer coated on the inner circumference thereof;
a light cover, substantially being an extending of a side of the light screen while being bended inwardly with respect to the primary visible light layer, having a light reflecting layer formed on the inner circumference thereof; and
a light-emitting source, being a bar-shaped tube or light emitting diode, capable of emitting blue/ultraviolet light while being enclosed in the concave of the light cover.

Moreover, in a preferred aspect, to achieve the above object, the present invention provides a brightness-enhanced light-emitting structure of a side-type backlight module applicable to a liquid crystal display, comprising:
a light screen, being a partial-open tube-like structure, having a primary visible light layer coated on the inner circumference thereof;
two light covers, one of which being substantially an extending of a side of the light screen while being bended inwardly with respect to the primary visible light layer, and another one being substantially an extending of another side of the light screen while being bended inwardly with respect to the primary visible light layer, each having a light reflecting layer formed on the inner circumference thereof; and
at least a light-emitting source, each being a bar-shaped tube or light emitting diode, capable of emitting blue/ultraviolet light while being enclosed in the concave of the corresponding light cover.

Other aspects and advantages of the present invention will become apparent from the following detailed description, taken in conjunction with the accompanying drawings, illustrating by way of example the principles of the present invention.

### BRIEF DESCRIPTION OF THE DRAWINGS

FIG. 1 shows a conventional backlight module/

FIG. 2 shows an ultraviolet-emitting backlight module, disclosed in U.S. Pat. No. 5,739,879, entitled "Backlighting device for liquid crystal displays".

FIG. 3 shows a backlight module disclosed in TW Pat. No. 94120669.

FIG. 4 shows a brightness-enhanced light-emitting structure according to a preferred embodiment of the invention.

FIG. 5 is a schematic diagram showing a brightness-enhanced light-emitting structure of the invention, being connected to a light guide plate, whereas a specific angle defined by the light-exiting part is a right angle.

FIG. 5A is a schematic diagram showing a brightness-enhanced light-emitting structure similar to that of FIG. 5, whereas the UV absorbing layer is replaced by a biconvex cylindrical lens.

FIG. 6 is a schematic diagram showing a brightness-enhanced light-emitting structure similar to that of FIG. 5, whereas a specific angle defined by the light-exiting part is not a right angle.

FIG. 7 to FIG. 9 are brightness-enhanced light-emitting structures which are structured similar to that of FIG. 6, but with different arrangement of light-emitting sources.

FIG. 10 to FIG. 15 are brightness-enhanced light-emitting structures which are structured similar to that of FIG. 4, but with light screens of different shapes.

FIG. 16 is a variation of the brightness-enhanced light-emitting structure of FIG. 15.

FIG. 17 is a variation of the brightness-enhanced light-emitting structure of FIG. 16.

FIG. 18 is another variation of the brightness-enhanced light-emitting structure of FIG. 16.

FIG. 19 is a schematic diagram showing a brightness-enhanced light-emitting structure having two light-emitting source being symmetrically arranged with respect to a light guide plate.

FIG. 20 is a variation of the brightness-enhanced light-emitting structure of FIG. 17.

FIG. 21 is a variation of the brightness-enhanced light-emitting structure of FIG. 20.

### DESCRIPTION OF THE PREFERRED EMBODIMENT

For your esteemed members of reviewing committee to further understand and recognize the fulfilled functions and structural characteristics of the invention, several preferable embodiments cooperating with detailed description are presented as the follows.

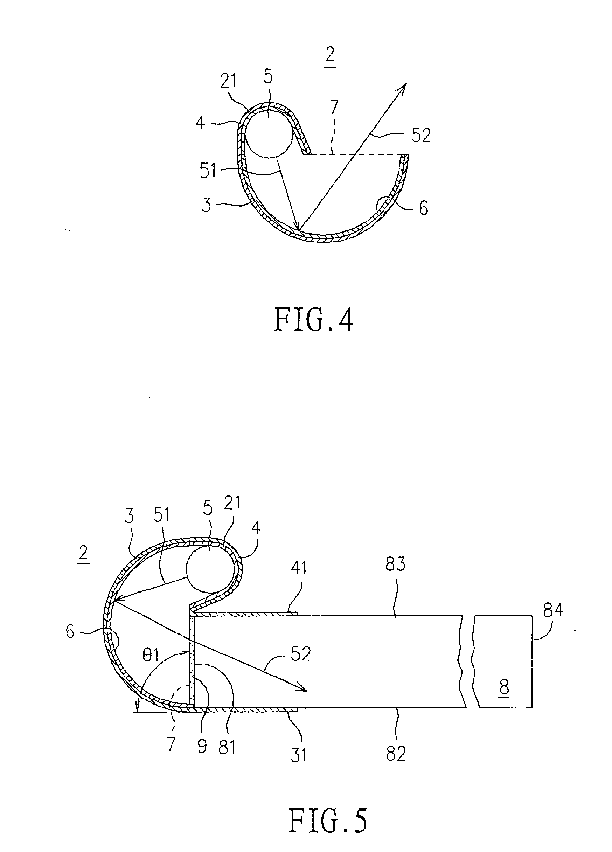

Please refer to FIG. 4, which shows a brightness-enhanced light-emitting structure according to a preferred embodiment of the invention. The brightness-enhanced light-emitting structure 2 for side-type backlight modules is comprised of: a light screen 3, being a partial-open tube-like structure, having a visible light layer 6 coated on the inner circumference thereof; a light cover 4, substantially being an extending of a side of the light screen 3 while being bended inwardly with respect to the visible light layer 6, having a light reflecting layer 21 formed on the inner circumference thereof; and a light-emitting source 5, each being a bar-shaped tube capable of emitting blue/ultraviolet light while being enclosed in the concave of the light cover 4. It is noted that as the light screen 3, the light cover 4 and the light-emitting source 5 are all tube-like objects, it is preferred to represent those by their cross sections hereinafter, as seen in FIG. 4.

In FIG. 4, the cross sections of the light screen 3 and the light cover 4 are respectively defined by arc curves. Moreover, the visible light layer 6 is a layer selected from the group consisting of a fluorescent coating, a phosphorescent coating and a light reflecting layer having an inner surface coated with at least one of the aforesaid coatings, In a preferred aspect, the visible light layer 6 is substantially an array of visible light excitation spots, which can be used for adjusting the color temperature of the light emitting therefrom as the it can adjust the amount of yellow light excited from the plural visible light excitation spots while mixing the same with the blue light emitted from the light-emitting source 5. As the invisible light of the light-emitting source 5 shine on the visible light layer 6, visible light 52 will be excited and discharged therefrom in a way that it will exit the light screen 3 through the light exiting part 7, formed between a sidewall of the light cover 4 and that of the light screen 3 as a gap therebetween. It is known that, for visible light or UV light, the luminous efficiency of a flawless reflective fluorescent apparatus is better than that of any conventional fluorescent apparatus which requires the excited visible light to pass through the fluorescent layer before being emitted. Therefore, the aforesaid visible light 52 is excited form the surface of the visible light layer 6 and will not be filtered by the visible light layer 6 before it is being discharged, so that the light utilization efficiency is enhanced while the brightness of the side-type backlight module using the brightness-enhanced light-emitting structure 2 is improved.

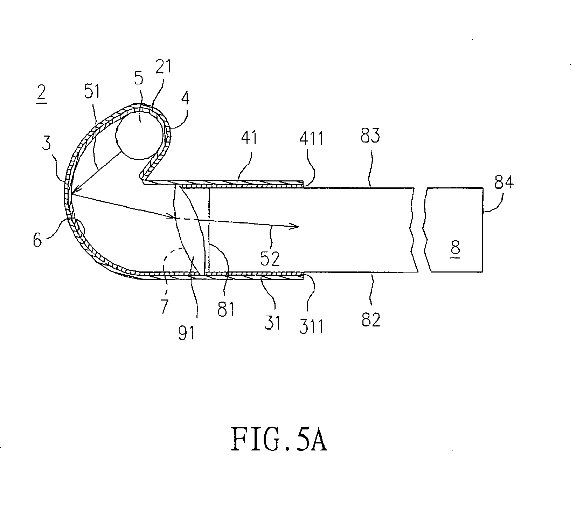

Please refer to FIG. 5, which is a schematic diagram showing a brightness-enhanced light-emitting structure of the invention, being connected to a light guide plate, whereas a specific angle θ₁ defined by the light-exiting part is a right angle. As seen in FIG. 5, the light exiting part 7 is connected to a light guide plate 8, whereas the light guide plates is comprised of a light exiting surface 83, a reflective surface 82, a proximal edge 81 neighboring the light exiting part 7, and a distant edge 84 opposite to the proximal edge 81 of the light guide plate 7. Moreover, a clipping apparatus 31, 41 is arranged at a proximal edge 81 of the light guide plate 8 proximate to the light exiting part 7 while being connected to the light screen 3 and the light cover 4, that is used for securing the proximal edge 81 of the light guide plate 8 upon the light exiting part 7. In addition, a UV absorbing layer 9 is disposed at a location between the exit of the light exiting part 7 and the proximal edge 81 of the light guide plate 8, whereas the UV absorbing layer 9 is a layer selected from the group consisting of a transparent TiO2 coating, a transparent ITO coating, a bar-shaped transparent glass plate capable of preventing the transmission of UV light, a bar-shaped glass block and the combination thereof. It is vital to dispose the UV absorbing layer 9 at the aforesaid position for absorbing residue ultraviolet light while permitting those discharged visible light to penetrate, so that the damage of ultraviolet light can be prevented. Furthermore, as most light guide plates 8 are made of resin, that it can becoming yellowish as being illuminated by UV light for a certain period of time, the disposition of the UV absorbing layer 9 can prevent the light guide plate 8 becoming yellowish. However, if the light guide plate 8 is made of glass, the disposition of the UV absorbing layer 9 is not necessary.

It is known to those skilled in the art that the function of the UV absorbing layer 9 can be replaced by a biconvex cylindrical lens 91, as the embodiment shown in FIG. 5A. By replacing the UV absorbing layer 9 with the biconvex cylindrical lens 91, it is intended to direct more reflected visible light 52 into the light guide plate 8, and since other components of FIG, 5A are similar to those shown in FIG. 5, they are not described further herein.

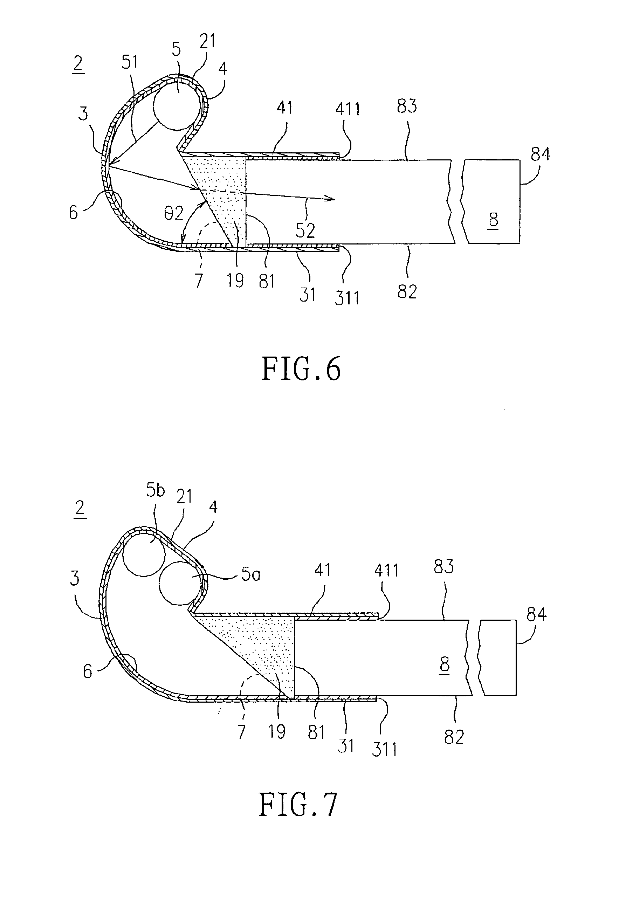

Please refer to FIG. 6, which is a schematic diagram showing a brightness-enhanced light-emitting structure similar to that of FIG. 5, whereas a specific angle defined by the light-exiting part is not a right angle. As seen in FIG. 6, the brightness-enhanced light-emitting structure 2 for side-type backlight modules is comprised of: a light screen 3, a light cover 4 having a light reflecting layer 21 formed therein, and a light-emitting source 5, wherein a visible light layer 6 is coated on the inner circumference of the light screen 3 while a light exiting part 7 is structured at a location between the light screen 3 and the light cover 4 by the sidewalls of the two; and the light exiting part 7 is further connected to a light guide plate 8, being comprised of a light exiting surface 83, a reflective surface 82, a proximal edge 81 neighboring the light exiting part 7, and a distant edge 84 opposite to the proximal edge 81 of the light guide plate 8. Moreover, a clipping apparatus 31, 41 is arranged at a proximal edge 81 of the light guide plate 8 proximate to the light exiting part 7 while being connected to the light screen 3 and the light cover 4, that is used for securing the proximal edge 81 of the light guide plate 8 upon the light exiting part 7. In addition, a UV absorbing layer 19 is disposed at a location between the exit of the light exiting part 7 and the proximal edge 81 of the light guide plate 8. As all the aforesaid components of FIG. 6 are similar to those shown in FIG. 5, they are not described further herein. The difference between the brightness-enhanced light-emitting structure of FIG. 5 and that of FIG. 6 is that: the specific angle θ₂ defined by the light-exiting part 7 is not a right angle whereas the specific angle θ₁ of FIG. 5 is a right angle. For adapting to the specific angle θ₂, the UV absorbing layer 19 is formed as a trapezoid object. Moreover, the two surfaces of the clipping apparatus 31, 41, that are facing toward the light guide plate 8, are respectively coated by two visible light layers 311, 411, each has light reflecting capability. It is emphasized and illustrated in the embodiment of FIG. 6 that the arrangement of the brightness-enhanced light-emitting structure along with the disposition of the light guide plate can be varied with respect to actual requirement, e.g. the light exiting surface 83 of the light guide plate 8 can be disposed not perpendicular to the light exiting part 7. As for the light guide plate 8 can be a rectangular light guide plate or a wedge-shaped light guide plate, it is known to those skilled in the art and thus is not described further herein.

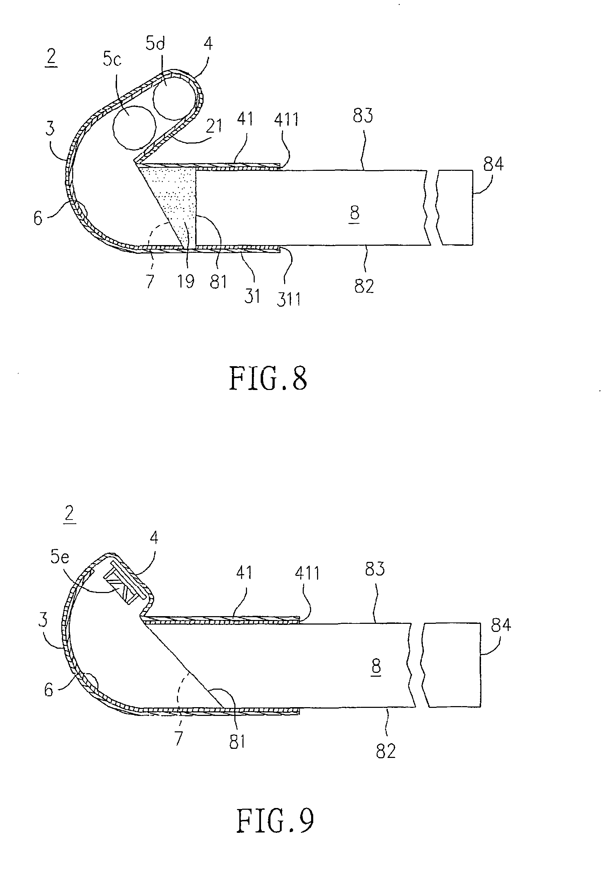

Please refer to FIG. 7 to FIG. 9, which are brightness-enhanced light-emitting structures similar to that of FIG. 6, but with different arrangement of light-emitting sources. As those shown in FIG. 7 to FIG. 9 are basing on that shown in FIG. 6 which have components the same as those of FIG. 6, only the differences between those and that shown in FIG. 6 are described further hereinafter. In FIG. 7, different from only one light-emitting source, there are two parallel-arranged light-emitting sources 5a, 5b, being received and enclosed by the light cover 4 while enabling the UV light of both the two light-emitting sources 5a, 5b to illuminate directly upon the visible light layer 6. In FIG. 8, different from the two parallel-arranged light-emitting sources 5a, 5b, there are two serial-arranged light-emitting sources 5c, 5d, being received and enclosed by the light cover 4 while enabling only the UV light of the light-emitting sources 5c to illuminate directly upon the visible light layer 6. In FIG. 9, different from the light-emitting source being a bar-shaped tube, it is a light emitting diode (LED) 5e. It is noted that if the light emitting diode 5e of FIG. 9 is a blue LED, the disposition of the UV absorbing layer 19 of FIG. 6 is not required while the proximal edge 81 of the light guide plate 8 can be extended to connect directly with the light exiting part 7, and the visible light layer 6 can be a coating of a fluorescent material capable of being excited to emit yellow light, by which the brightness-enhanced light-emitting structure of FIG. 9 can discharge white light by the mixture of the blue light of the blue LED 5e and the excited yellow light. From the above description, it is known that there can be a variety of light emitting device capable of being adopted as the light-emitting source of the invention. For instance, the LED 5e can be a lead-type LED or a surface-mount LED, or the light-emitting source can be an array of light emitting devices, being received in the light cover 4, while the appearance of the light cover 4 is varying with respect to the amount and type of the light-emitting device.

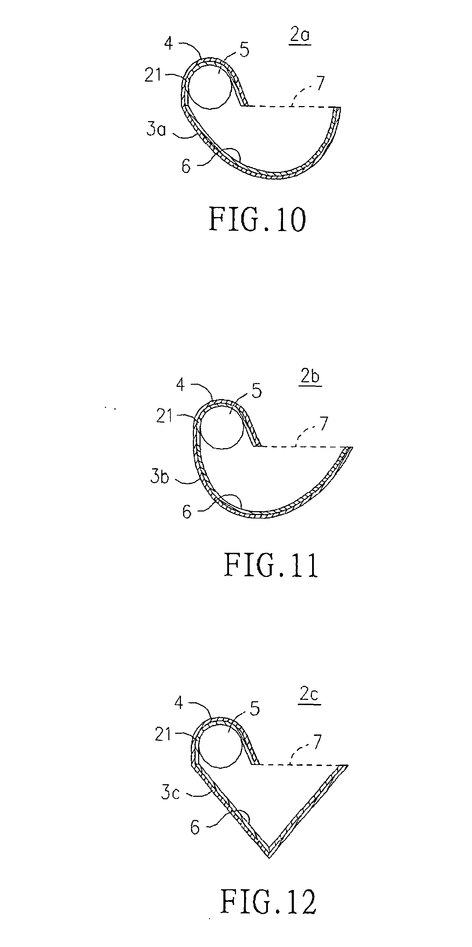

Please refer to FIG. 10 to FIG. 15, which are brightness-enhanced light-emitting structures similar to that of FIG. 4, but with light screens of different shapes. As those shown in FIG. 10 to FIG. 15 are basing on that shown in FIG. 4 which have components the same as those of FIG. 4, only the differences between those and that shown in FIG. 4 are described further hereinafter. The difference between the brightness-enhanced light-emitting structures 2a ~ 2f are the shapes of their light screens, that is, the cross-sectional contours of the light screens 3a~3f are not the same, whereas the cross section of the light screen 3a is defined by an inward-bending parabolic curve; that of the light screen 3b is defined by an outward-extending parabolic curve; and those of the light screens 3c∼3e are respectively defined by a triangle, a rectangle, and a trapezoid; and that of the light screen 3f is defined by the combination of a curve and a straight line. Therefore, it is concluded that a contour of a cross section of the light screen of the invention can be defined by a function selected from the group consisting of a function of a geometrical curve, a function of a polygon and the combination thereof. Furthermore, the light-emitting sources used in the embodiments shown in FIG. 10 to FIG. 15 can be those shown in FIG. 7 to FIG. 7 while the light screens used in FIG. 7 to FIG. 9 can be those shown in FIG. 10 to FIG. 15. In addition, a contour of a cross section of the light cover 4 of the invention can also be defined by a function selected from the group consisting of a function of a geometrical curve, a function of a polygon and the combination thereof.

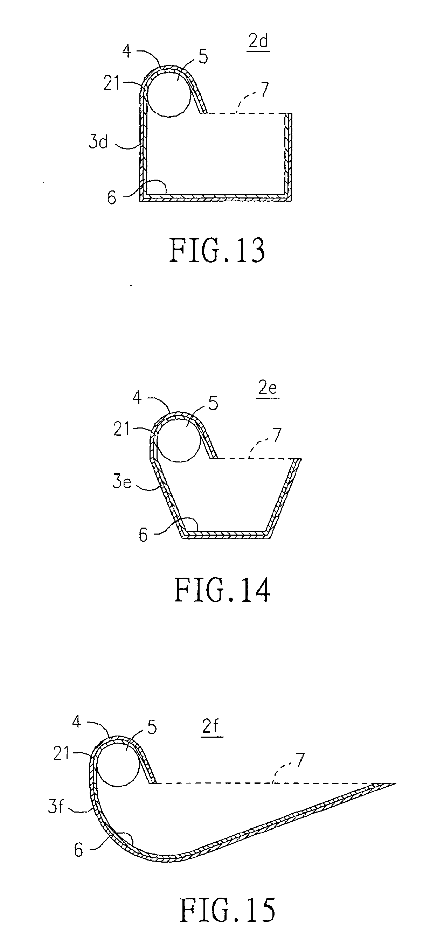

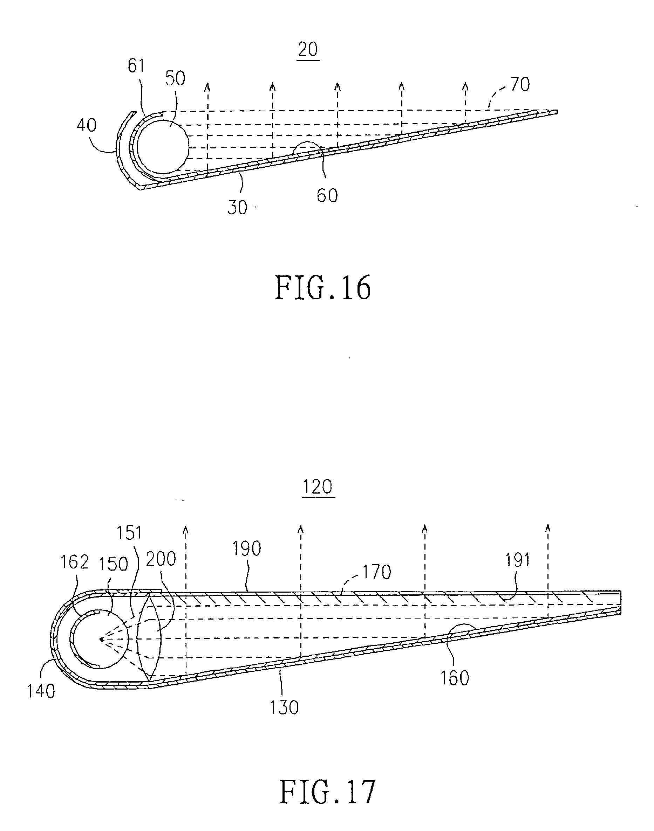

Please refer to FIG. 16, which is a variation of the brightness-enhanced light-emitting structure of FIG. 15. Similar to that shown in FIG. 5, the brightness-enhanced light-emitting structure 20 for side-type backlight modules is comprised of: a light screen 30, a light cover 40, and a light-emitting source 50, wherein a visible light layer 60 is coated on the inner circumference of the light screen 30 while a light exiting part 70 is structured at a location between the light screen 30 and the light cover 40 by the sidewalls of the two; and the light exiting part 70 is further connected to a light guide plate. The difference between the brightness-enhanced light-emitting structure 20 and that of FIG. 5 is that: a visible light reflection layer 61 is disposed at a position between the light-emitting source 50 and the light cover 40, whereas the visible light reflection layer 61 is substantially an extending portion of the visible light layer 60. Similarly, the visible light reflection layer 61 is a layer selected from the group consisting of a fluorescent coating, a phosphorescent coating and a light reflecting layer having an inner surface coated with at least one of the aforesaid coatings. Please refer to FIG. 17, which is a variation of the brightness-enhanced light-emitting structure of FIG. 16. Similar to that shown in FIG. 16, the brightness-enhanced light-emitting structure 120 for side-type backlight modules is comprised of: a light screen 130, a light cover 140, and a light-emitting source 150, wherein a visible light layer 160 is coated on the inner circumference of the light screen 130 while a light exiting part 170 is structured at a location between the light screen 130 and the light cover 140 by the sidewalls of the two. The differences between the brightness-enhanced light-emitting structure 120 and that of FIG. 16 is that:
(1) The visible light layer 160 is is a layer selected from the group consisting of a fluorescent coating, a phosphorescent coating and a light reflecting layer having an inner surface coated with at least one of the aforesaid coatings.
(2) There is a shutter, composed of a plural of light reflecting sheets 191 that is disposed at the light exiting part 170 and used for reflecting the light of the light-emitting source 150 while receiving light from the visible light layer 160. It is noted that the intervals spacing any two of the plural light reflecting sheets 191 in the shutter are different from each other in a way that the smaller the closer to the light-emitting source 150 while the larger the farther to the light-emitting source 150. As there are more light reflecting sheets 191 being arranged at area near the light-emitting source 150 than those being arranged at area farther away from the light-emitting source 150, more reflected light are blocked from being discharged from area near the light-emitting source 150 while less are blocked from being discharged from area farther away from the light-emitting source 150, and thus the reflected visible light can be discharged out of the light exiting part 170 uniformly.
(3) There is a lens 200, being disposed at a position of a light path traveling between the light exiting part 170 and the light-emitting source 150. In a preferred aspect, the lens can be a device selected from the group consisting of a biconvex cylindrical lens, a plano-convex lens, a lens with a plurality of pedestals, and the combination thereof. The function of the lens 200 is to focus the blue/ultraviolet light emitted from the light-emitting source 150 for enabling the invisible light to shine on the visible light layer 160 uniformly.

In addition, a UV absorbing layer 190 is disposed at a location at the exit of the light exiting part 170 while it is further connected to a light guide plate, that the UV absorbing layer 190 is functioned similar to those shown in FIG. 5 to FIG, 9, and thus is not described further herein. Similar to the embodiment shown in FIG. 5, if the light emitted from the light-emitting source 150 of FIG. 17 is UV light, the lens 200 should be arranged inside the light exiting part 170 while being made of a quartz material that is capable of allowing the transmission of UV light.

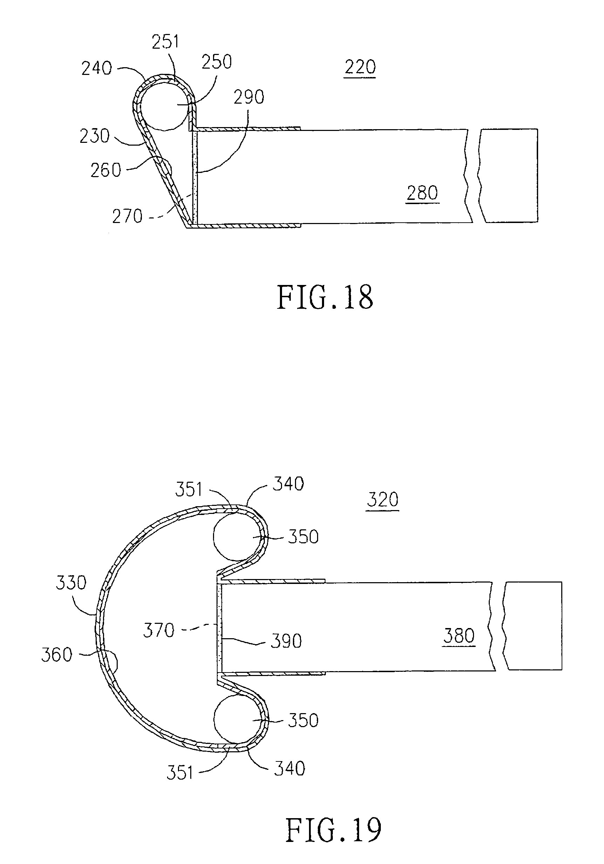

Please refer to FIG. 18, which is another variation of the brightness-enhanced light-emitting structure of FIG. 16. Similar to that shown in FIG. 16, the brightness-enhanced light-emitting structure 220 for side-type backlight modules is comprised of: a light screen 230, a light cover 240 having a light reflecting layer 251 formed therein, and a light-emitting source 250, wherein a visible light layer 260 is coated on the inner circumference of the light screen 230 while a light exiting part 270 is structured at a location between the light screen 230 and the light cover 240 by the sidewalls of the two; and the light exiting part2 70 is further connected to a light guide plate 280. By which, almost all the light excited by the visible light layer 260 and reflected by the light screen 230 is sufficiently directed to enter the light guide plate 280, such that almost no light is blocked from entering the light guide plate 280 by the light-emitting source 250 itself, and the excited visible light is reflected to enter the same without being filtered by the visible light layer.

Please refer to FIG. 19, which is a schematic diagram showing a brightness-enhanced light-emitting structure having two light-emitting source being symmetrically arranged with respect to a light guide plate. The brightness-enhanced light-emitting structure 320 for side-type backlight modules is comprised of: a light screen 330; two light cover 340, being symmetrically arranged with respect to the light screen 330 while each having a light reflecting layer 351 formed therein; and two light-emitting source 350, respectively being received and enclosed by its corresponding light cover 340; wherein a visible light layer 360 is coated on the inner circumference of the light screen 330 while a light exiting part 370 is structured at a location between the light screen 330 and the two light cover 340 by the sidewalls thereof; and a UV absorbing layer 390 is arranged at the exit of the light exiting part 370 that is further connected to a light guide plate 380. Similarly, the dual light-emitting source can be adopted by the embodiments shown in, FIG. 5A, FIG. 6 to FIG. 9 while the light screens used in FIG. 10 to FIG. 17 can also be adopted.

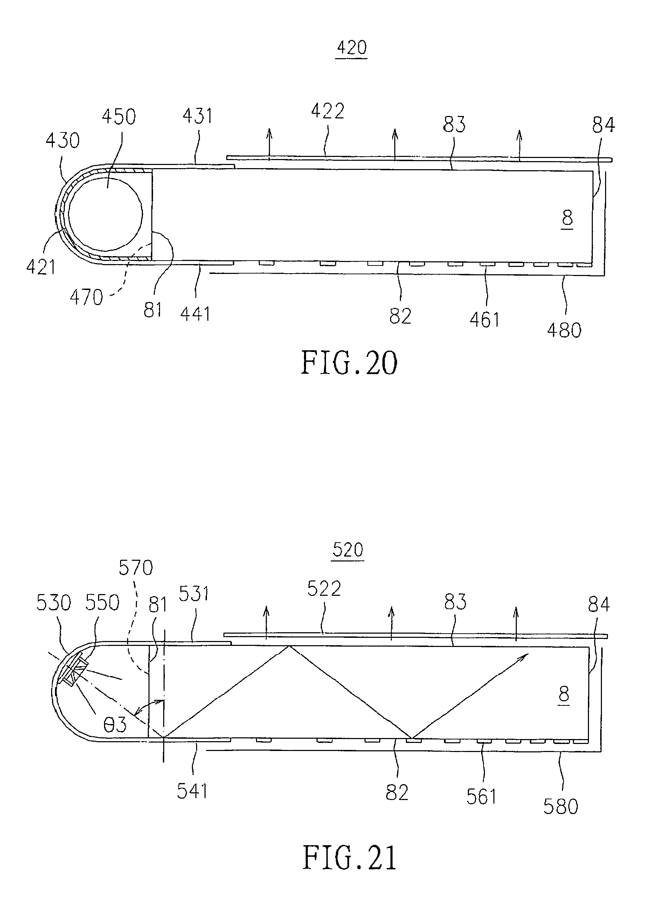

Please refer to FIG. 20, which is a variation of the brightness-enhanced light-emitting structure of FIG. 17. The brightness-enhanced light-emitting structure 420 for side-type backlight modules is comprised of: a light screen 430, having a light exiting part 470; a light cover 440 having a light reflecting layer formed therein 421; and a light-emitting source 450, wherein the light-emitting source 450, substantially being a tube capable of emitting blue light; wherein the light exiting part 470 is further connected to a light guide plate 8 by the use of a clipping apparatus 431, 441; and the light guide plate 8, made of a quartz material, is further comprised of a light exiting surface 83, a reflective surface 82, a proximal edge 81 neighboring the light exiting part 7, and a distant edge 84 opposite to the proximal edge 81 of the light guide plate 8. Moreover, a light reflecting shield 480 is arranged to enclose the reflective surface 82 and the distant edge 84 opposite to the proximal edge 81 of the light guide plate 8, while sandwiching a plurality of visible light excitation spots 461 between the reflective surface 82 and the light reflecting shield 480 in a manner that the closer to the light-emitting source 450 the smaller the area is covered by the visible light excitation spots 461, and the farther to the light-emitting source 450 the larger the area is covered by the visible light excitation spots 461, similar to the distribution of those visible light excitation spots 161 shown in FIG. 17, that is, the density of the visible light excitation spots 461 or the area of each of the same is increasing as it is distributed farther from the light-emitting source 450. Thereby, the reflected visible light can be discharged out of the light exiting surface 83 uniformly.

Please refer to FIG. 21, which is a variation of the brightness-enhanced light-emitting structure of FIG. 20. Similar to that shown in FIG. 20, the brightness-enhanced light-emitting structure 520 for side-type backlight modules is comprised of: a light screen 530, having a light exiting part 570; a light cover 540; and at least a light-emitting source 550, capable of emitting blue or UV light; wherein the light-emitting source 450; wherein the light exiting part 470 is further connected to a light guide plate 8 by the use of a clipping apparatus 531, 541; and the light guide plate 8, having a UV absorbing layer 522 covered thereon, is further comprised of a light exiting surface 83 arranged at the top thereof, a reflective surface 82 arranged at the bottom thereon, a proximal edge 81 neighboring the light exiting part 7, and a distant edge 84 opposite to the proximal edge 81 of the light guide plate 8. Moreover, a light reflecting shield 580 is arranged to enclose the reflective surface 82 and the distant edge 84 opposite to the proximal edge 81 of the light guide plate 8, while sandwiching a plurality of visible light excitation spots 561 between the reflective surface 82 and the light reflecting shield 580. As all the aforesaid components of FIG. 21 are similar to those shown in FIG. 20, they are not described further herein. The difference between the embodiment of FIG. 21 with that of FIG. 20 is that: each of the at least one light-emitting source 550 of FIG. 21 is a blue LED while being positioned to enable an included angle θ₃ to be formed between the center axis 551 of the LED 550 and the normal line of the reflective surface 82. By the formation of the included angle θ₃, the light of the LED 550 enabled to enter the light guide plate in a slanted manner. Hence, by the cooperation of the slanted incident light and the distribution of the plural visible light excitation spots, total reflection can be achieved while enabling the visible light to be discharged more uniformly. Moreover, it is noted that the tube-like light-emitting source 450 of FIG. 20 can be replaced and substituted by the LED 550 of FIG. 21, and vice versa. That is, the LED 550 of FIG. 21 can be received and enclosed by the light screen 430 of FIG. 20, and the light-emitting source 450 of FIG. 21 can be biased-arranged in the light screen 530 of FIG. 21.

To sum up, the present invention provides a backlight module capable of emitting visible light rays, primarily excited from the surface of the fluorescent/phosphorescent coating of a visible light layer, in a reflective manner, so that not only the light utilization efficiency and the intensity of light as it is entering light guide plates is greatly improved, but also it can be adapted for any luminescent assembly, device and apparatus.

While the preferred embodiment of the invention has been set forth for the purpose of disclosure, modifications of the disclosed embodiment of the invention as well as other embodiments thereof may occur to those skilled in the art. Accordingly, the appended claims are intended to cover all embodiments which do not depart from the spirit and scope of the invention.

## Claims

1. A brightness-enhanced light-emitting structure of a side-type backlight module applicable to a liquid crystal display, comprising:
a light screen, being a partial-open tube-like structure, having a primary visible light layer coated on the inner circumference thereof;
a light cover, substantially being an extending of a side of the light screen while being bended inwardly with respect to the primary visible light layer; and
at least a light-emitting source, each being a bar-shaped tube capable of emitting blue/ultraviolet light while being enclosed in the concave of the light cover.

2. The brightness-enhanced light-emitting structure of claim 1, wherein a contour of a cross section of the light screen is defined by a function selected from the group consisting of a function of a geometrical curve, a function of a polygon and the combination thereof.

3. The brightness-enhanced light-emitting structure of claim 1, wherein a contour of a cross section of the light cover is defined by a function selected from the group consisting of a function of a geometrical curve, a function of a polygon and the combination thereof.

4. The brightness-enhanced light-emitting structure of claim 1, wherein the visible light layer is a layer selected from the group consisting of a fluorescent coating, a phosphorescent coating and a light reflecting layer having an inner surface coated with at least one of the aforesaid coatings.

5. The brightness-enhanced light-emitting structure of claim 1, wherein the visible light layer is extendedly disposed on an inner sidewall of the light screen facing toward the light-emitting source.

6. The brightness-enhanced light-emitting structure of claim 1, wherein the visible light layer is designed to be an array of a plurality of visible light excitation spots as the light-emitting source is emitting blue light.

7. The brightness-enhanced light-emitting structure of claim 6, wherein the closer to the light-emitting source the smaller the area of the inner sidewall is covered by the visible light excitation spots, while the farther to the light-emitting source the larger the area of the inner sidewall is covered by the visible light excitation spots.

8. The brightness-enhanced light-emitting structure of claim 6, wherein each of the plural visible light excitation spots is a spot selected from the group consisting of a fluorescent coating, a phosphorescent coating and a light reflecting spot having an inner surface coated with at least one of the aforesaid coatings.

9. The brightness-enhanced light-emitting structure of claim 1, wherein the light cover is structured as one of the following: a surface of the light cover is a light reflecting layer, and a light reflecting layer is formed on the surface of the light cover.

10. The brightness-enhanced light-emitting structure of claim 1, further comprising:
a light-exiting part, being structured at a location between the light screen 230 and the light cover 240 by the sidewalls of the two, having a UV absorbing layer disposed at an exit thereof.

11. The brightness-enhanced light-emitting structure of claim 10, wherein the UV absorbing layer is a layer selected from the group consisting of a transparent TiO2 coating, a transparent ITO coating, a bar-shaped transparent glass plate capable of preventing the transmission of UV light, a bar-shaped glass block and the combination thereof.

12. The brightness-enhanced light-emitting structure of claim 10, wherein the UV absorbing layer further comprises: at least a lens, being disposed at the exit of the light-exiting part.

13. The brightness-enhanced light-emitting structure of claim 10, further comprising:
a shutter, composed of a plural of light reflecting sheets, being disposed at the light exiting part.

14. The brightness-enhanced light-emitting structure of claim 13, wherein the intervals spacing any two of the plural light reflecting sheets in the shutter are different from each other in a way that the smaller the closer to the light-emitting source while the larger the farther to the light-emitting source.

15. The brightness-enhanced light-emitting structure of claim 10, wherein a light guide plate, having a light exiting surface, a reflective surface and a proximal edge neighboring the light exiting part, is disposed at the light exiting part.

16. The brightness-enhanced light-emitting structure of claim 15, wherein the light guide plate is selected from a group consisting of a rectangular light guide plate and a wedge-shaped light guide plate.

17. The brightness-enhanced light-emitting structure of claim 15, wherein the light exiting surface of the light guide plate is not disposed perpendicular to the light exiting part.

18. The brightness-enhanced light-emitting structure of claim 15, wherein a clipping apparatus is arranged at a proximal edge of the light guide plate proximate to the light exiting part while being connected to the light screen and the light cover, for securing the proximal edge of the light guide plate upon the light exiting part.

19. The brightness-enhanced light-emitting structure of claim 18, wherein a visible light layer is formed on a surface of the clipping apparatus facing toward the light guide plate.

20. The brightness-enhanced light-emitting structure of claim 19, wherein the visible light layer is a layer selected from the group consisting of a fluorescent coating, a phosphorescent coating and a light reflecting layer having an inner surface coated with at least one of the aforesaid coatings.

21. The brightness-enhanced light-emitting structure of claim 1, further comprising:
at least a lens, each being disposed at a position of a light path traveling between the light exiting part and the light-emitting source.

22. A brightness-enhanced light-emitting structure of a side-type backlight module applicable to a liquid crystal display, comprising:
a light screen, being a partial-open tube-like structure, having a primary visible light layer coated on the inner circumference thereof;
two light covers, one of which being substantially an extending of a side of the light screen while being bended inwardly with respect to the primary visible light layer, and another one being substantially an extending of another side of the light screen while being bended inwardly with respect to the primary visible light layer; and
at least a light-emitting source, each being a bar-shaped tube capable of emitting blue/ultraviolet light while being enclosed in the concave of the corresponding light cover.

23. The brightness-enhanced light-emitting structure of claim 22, wherein a contour of a cross section of the light screen is defined by a function selected from the group consisting of a function of a geometrical curve, a function of a polygon and the combination thereof.

24. The brightness-enhanced light-emitting structure of claim 22, wherein a contour of a cross section of any one of the two light covers is defined by a function selected from the group consisting of a function of a geometrical curve, a function of a polygon and the combination thereof.

25. The brightness-enhanced light-emitting structure of claim 22, wherein the visible light layer is a layer selected from the group consisting of a fluorescent coating, a phosphorescent coating and a light reflecting layer having an inner surface coated with at least one of the aforesaid coatings.

26. The brightness-enhanced light-emitting structure of claim 22, wherein the visible light layer is extendedly disposed on an inner sidewall of the light screen facing toward the light-emitting source.

27. The brightness-enhanced light-emitting structure of claim 22, wherein the visible light layer is designed to be an array of a plurality of visible light excitation spots as the light-emitting source is emitting blue light.

28. The brightness-enhanced light-emitting structure of claim 27, wherein the closer to the light-emitting source the smaller the area of the inner sidewall is covered by the visible light excitation spots, while the farther to the light-emitting source the larger the area of the inner sidewall is covered by the visible light excitation spots.

29. The brightness-enhanced light-emitting structure of claim 27, wherein each of the plural visible light excitation spots is a spot selected from the group consisting of a fluorescent coating, a phosphorescent coating and a light reflecting spot having an inner surface coated with at least one of the aforesaid coatings.

30. The brightness-enhanced light-emitting structure of claim 21, further comprising:
a light-exiting part, being structured at a location between the light screen 230 and the light cover 240 by the sidewalls of the two, having a UV absorbing layer disposed at an exit thereof.

31. The brightness-enhanced light-emitting structure of claim 30, wherein the UV absorbing layer is a layer selected from the group consisting of a transparent TiO2 coating, a transparent ITO coating, a bar-shaped transparent glass plate capable of preventing the transmission of UV light, a bar-shaped glass block and the combination thereof.

32. The brightness-enhanced light-emitting structure of claim 30, wherein the UV absorbing layer further comprises: at least a lens, being disposed at the exit of the light-exiting part.

33. The brightness-enhanced light-emitting structure of claim 30, further comprising:
a shutter, composed of a plural of light reflecting sheets, being disposed at the light exiting part.

34. The brightness-enhanced light-emitting structure of claim 33, wherein the intervals spacing any two of the plural light reflecting sheets in the shutter are different from each other in a way that the smaller the closer to the light-emitting source while the larger the farther to the light-emitting source.

35. The brightness-enhanced light-emitting structure of claim 33, wherein a light guide plate, having a light exiting surface, a reflective surface and a proximal edge neighboring the light exiting part, is disposed at the light exiting part.

36. The brightness-enhanced light-emitting structure of claim 35, wherein the light guide plate is selected from a group consisting of a rectangular light guide plate and a wedge-shaped light guide plate.

37. The brightness-enhanced light-emitting structure of claim 35, wherein the light exiting surface of the light guide plate is not disposed perpendicular to the light exiting part.

38. The brightness-enhanced light-emitting structure of claim 35, wherein a clipping apparatus is arranged at a proximal edge of the light guide plate proximate to the light exiting part while being connected to the light screen and the light cover, for securing the proximal edge of the light guide plate upon the light exiting part.

39. The brightness-enhanced light-emitting structure of claim 38, wherein a visible light layer is formed on a surface of the clipping apparatus facing toward the light guide plate.

40. The brightness-enhanced light-emitting structure of claim 39, wherein the visible light layer is a layer selected from the group consisting of a fluorescent coating, a phosphorescent coating and a light reflecting layer having an inner surface coated with at least one of the aforesaid coatings.

41. The brightness-enhanced light-emitting structure of claim 35, wherein a light reflecting shield is arranged to enclose the reflective surface and a distant edge opposite to the proximal edge of the light guide plate, while sandwiching a plurality of visible light excitation spots between the reflective surface and the light reflecting shield in a manner that the closer to the light-emitting source the smaller the area of the inner sidewall is covered by the visible light excitation spots, and the farther to the light-emitting source the larger the area of the inner sidewall is covered by the visible light excitation spots.

42. The brightness-enhanced light-emitting structure of claim 22, further comprising:
at least a lens, each being disposed at a position of a light path traveling between the light exiting part and the light-emitting source.

43. A brightness-enhanced light-emitting structure of a side-type backlight module applicable to a liquid crystal display, comprising:
a light screen, being a partial-open tube-like structure, having a primary visible light layer coated on the inner circumference thereof;
a light cover, substantially being an extending of a side of the light screen while being bended inwardly with respect to the primary visible light layer; and
a light-emitting source, being a light emitting diode capable of emitting blue/ultraviolet light while being enclosed in the concave of the light cover.

44. The brightness-enhanced light-emitting structure of claim 43, wherein a contour of a cross section of the light screen is defined by a function selected from the group consisting of a function of a geometrical curve, a function of a polygon and the combination thereof.

45. The brightness-enhanced light-emitting structure of claim 43, wherein a contour of a cross section of the light cover is defined by a function selected from the group consisting of a function of a geometrical curve, a function of a polygon and the combination thereof.

46. The brightness-enhanced light-emitting structure of claim 43, wherein the visible light layer is a layer selected from the group consisting of a fluorescent coating, a phosphorescent coating and a light reflecting layer having an inner surface coated with at least one of the aforesaid coatings.

47. The brightness-enhanced light-emitting structure of claim 43, wherein the visible light layer is extendedly disposed on an inner sidewall of the light screen facing toward the light-emitting source.

48. The brightness-enhanced light-emitting structure of claim 43, wherein the visible light layer is designed to be an array of a plurality of visible light excitation spots as the light-emitting source is emitting blue light.

49. The brightness-enhanced light-emitting structure of claim 48, wherein the closer to the light-emitting source the smaller the area of the inner sidewall is covered by the visible light excitation spots, while the farther to the light-emitting source the larger the area of the inner sidewall is covered by the visible light excitation spots.

50. The brightness-enhanced light-emitting structure of claim 48, wherein each of the plural visible light excitation spots is a spot selected from the group consisting of a fluorescent coating, a phosphorescent coating and a light reflecting spot having an inner surface coated with at least one of the aforesaid coatings.

51. The brightness-enhanced light-emitting structure of claim 43, further comprising:
a light-exiting part, being structured at a location between the light screen 230 and the light cover 240 by the sidewalls of the two, having a UV absorbing layer disposed at an exit thereof.

52. The brightness-enhanced light-emitting structure of claim 51, wherein the UV absorbing layer is a layer selected from the group consisting of a transparent TiO2 coating, a transparent ITO coating, a bar-shaped transparent glass plate capable of preventing the transmission of UV light, a bar-shaped glass block and the combination thereof.

53. The brightness-enhanced light-emitting structure of claim 51, wherein the UV absorbing layer further comprises: at least a lens, being disposed at the exit of the light-exiting part.

54. The brightness-enhanced light-emitting structure of claim 51, further comprising:
a shutter, composed of a plural of light reflecting sheets, being disposed at the light exiting part.

55. The brightness-enhanced light-emitting structure of claim 54, wherein the intervals spacing any two of the plural light reflecting sheets in the shutter are different from each other in a way that the smaller the closer to the light-emitting source while the larger the farther to the light-emitting source.

56. The brightness-enhanced light-emitting structure of claim 51, wherein a light guide plate, having a light exiting surface, a reflective surface and a proximal edge neighboring the light exiting part, is disposed at the light exiting part.

57. The brightness-enhanced light-emitting structure of claim 56, wherein the light guide plate is selected from a group consisting of a rectangular light guide plate and a wedge-shaped light guide plate.

58. The brightness-enhanced light-emitting structure of claim 56, wherein the light exiting surface of the light guide plate is not disposed perpendicular to the light exiting part.

59. The brightness-enhanced light-emitting structure of claim 56, wherein a clipping apparatus is arranged at a proximal edge of the light guide plate proximate to the light exiting part while being connected to the light screen and the light cover, for securing the proximal edge of the light guide plate upon the light exiting part.

60. The brightness-enhanced light-emitting structure of claim 59, wherein a visible light layer is formed on a surface of the clipping apparatus facing toward the light guide plate.

61. The brightness-enhanced light-emitting structure of claim 60, wherein the visible light layer is a layer selected from the group consisting of a fluorescent coating, a phosphorescent coating and a light reflecting layer having an inner surface coated with at least one of the aforesaid coatings.

62. The brightness-enhanced light-emitting structure of claim 56, wherein a light reflecting shield is arranged to enclose the reflective surface and a distant edge opposite to the proximal edge of the light guide plate, while sandwiching a plurality of visible light excitation spots between the reflective surface and the light reflecting shield in a manner that the closer to the light-emitting source the smaller the area of the inner sidewall is covered by the visible light excitation spots, and the farther to the light-emitting source the larger the area of the inner sidewall is covered by the visible light excitation spots.

63. The brightness-enhanced light-emitting structure of claim 43, wherein the light-emitting source is a device selected from the group consisting of a lead-type light emitting diode, a surface-mount light emitting diode, and the combination thereof.

64. The brightness-enhanced light-emitting structure of claim 43, further comprising:
at least a lens, each being disposed at a position of a light path traveling between the light exiting part and the light-emitting source.

65. A brightness-enhanced light-emitting structure of a side-type backlight module applicable to a liquid crystal display, comprising:
a light screen, being a partial-open tube-like structure, having a primary visible light layer coated on the inner circumference thereof;
two light covers, one of which being substantially an extending of a side of the light screen while being bended inwardly with respect to the primary visible light layer, and another one being substantially an extending of another side of the light screen while being bended inwardly with respect to the primary visible light layer; and
at least a light-emitting source, each being a light emitting diode capable of emitting blue/ultraviolet light while being enclosed in the concave of the corresponding light cover.

66. The brightness-enhanced light-emitting structure of claim 65, wherein a contour of a cross section of the light screen is defined by a function selected from the group consisting of a function of a geometrical curve, a function of a polygon and the combination thereof.

67. The brightness-enhanced light-emitting structure of claim 65, wherein a contour of a cross section of any one of the two light covers is defined by a function selected from the group consisting of a function of a geometrical curve, a function of a polygon and the combination thereof.

68. The brightness-enhanced light-emitting structure of claim 65, wherein the visible light layer is a layer selected from the group consisting of a fluorescent coating, a phosphorescent coating and a light reflecting layer having an inner surface coated with at least one of the aforesaid coatings.

69. The brightness-enhanced light-emitting structure of claim 65, wherein the visible light layer is extendedly disposed on an inner sidewall of the light screen facing toward the light-emitting source.

70. The brightness-enhanced light-emitting structure of claim 65, wherein the visible light layer is designed to be an array of a plurality of visible light excitation spots as the light-emitting source is emitting blue light.

71. The brightness-enhanced light-emitting structure of claim 70, wherein the closer to the light-emitting source the smaller the area of the inner sidewall is covered by the visible light excitation spots, while the farther to the light-emitting source the larger the area of the inner sidewall is covered by the visible light excitation spots.

72. The brightness-enhanced light-emitting structure of claim 70, wherein each of the plural visible light excitation spots is a spot selected from the group consisting of a fluorescent coating, a phosphorescent coating and a light reflecting spot having an inner surface coated with at least one of the aforesaid coatings.

73. The brightness-enhanced light-emitting structure of claim 65, further comprising:
a light-exiting part, being structured at a location between the light screen 230 and the light cover 240 by the sidewalls of the two, having a UV absorbing layer disposed at an exit thereof.

74. The brightness-enhanced light-emitting structure of claim 73, wherein the UV absorbing layer is a layer selected from the group consisting of a transparent TiO2 coating, a transparent ITO coating, a bar-shaped transparent glass plate capable of preventing the transmission of UV light, a bar-shaped glass block and the combination thereof.

75. The brightness-enhanced light-emitting structure of claim 73, wherein the UV absorbing layer further comprises: at least a lens, being disposed at the exit of the light-exiting part.

76. The brightness-enhanced light-emitting structure of claim 73, further comprising:
a shutter, composed of a plural of light reflecting sheets, being disposed at the light exiting part.

77. The brightness-enhanced light-emitting structure of claim 76, wherein the intervals spacing any two of the plural light reflecting sheets in the shutter are different from each other in a way that the smaller the closer to the light-emitting source while the larger the farther to the light-emitting source.

78. The brightness-enhanced light-emitting structure of claim 73, wherein a light guide plate, having a light exiting surface, a reflective surface and a proximal edge neighboring the light exiting part, is disposed at the light exiting part.

79. The brightness-enhanced light-emitting structure of claim 78, wherein the light guide plate is selected from a group consisting of a rectangular light guide plate and a wedge-shaped light guide plate.

80. The brightness-enhanced light-emitting structure of claim 78, wherein the light exiting surface of the light guide plate is not disposed perpendicular to the light exiting part.

81. The brightness-enhanced light-emitting structure of claim 78, wherein a clipping apparatus is arranged at a proximal edge of the light guide plate proximate to the light exiting part while being connected to the light screen and the light cover, for securing the proximal edge of the light guide plate upon the light exiting part.

82. The brightness-enhanced light-emitting structure of claim 81, wherein a visible light layer is formed on a surface of the clipping apparatus facing toward the light guide plate.

83. The brightness-enhanced light-emitting structure of claim 82, wherein the visible light layer is a layer selected from the group consisting of a fluorescent coating, a phosphorescent coating and a light reflecting layer having an inner surface coated with at least one of the aforesaid coatings.

84. The brightness-enhanced light-emitting structure of claim 78, wherein a light reflecting shield is arranged to enclose the reflective surface and a distant edge opposite to the proximal edge of the light guide plate, while sandwiching a plurality of visible light excitation spots between the reflective surface and the light reflecting shield in a manner that the closer to the light-emitting source the smaller the area of the inner sidewall is covered by the visible light excitation spots, and the farther to the light-emitting source the larger the area of the inner sidewall is covered by the visible light excitation spots.

85. The brightness-enhanced light-emitting structure of claim 65, wherein the light-emitting source is a device selected from the group consisting of a lead-type light emitting diode, a surface-mount light emitting diode, and the combination thereof.

86. The brightness-enhanced light-emitting structure of claim 65, further comprising:
at least a lens, each being disposed at a position of a light path traveling between the light exiting part and the light-emitting source.

## Amended claims

### Amended claims in accordance with Rule 137(2) EPC.

**1.** A side-type backlight module with a brightness-enhanced light-emitting structure connectable to a light guide plate of a liquid crystal display, comprising:
a light screen, being a partial-open tube-like structure, having a primary visible light layer coated on the inner circumferential surface thereof, wherein the primary visible light layer is a layer selected from the group consisting of a fluorescent coating, a phosphorescent coating and a light reflecting layer having an inner surface coated with at least one of the aforesaid coatings;
a light cover, substantially being an extending of a side of the light screen while being bended inwardly with respect to the primary visible light layer; and
at least a light-emitting source, each being a bar-shaped tube capable of emitting blue and/or ultraviolet light while being enclosed in the concave of the light cover while enabling the blue and/or ultraviolet light to illuminate directly upon the primary visible light layer,
**characterized in**
**that** the light-emitting structure is capable of emitting visible light rays being primarily excited from the surface of the primary visible light layer in a reflective manner.
